# EUROPEAN PATENT SPECIFICATION

(11) **EP 2 858 502 B1**
(45) Date of publication and mention of the grant of the patent: **22.03.2017**
(21) Application number: 13783831.4
(22) Date of filing: 30.05.2013
(51) Int. Cl.: A01N 59/20, A01P 3/00, A01N 25/14

(54) **PESTICIDE COMPOUND, USE THEREOF AND METHOD OF PROTECTION OF PLANTS**
PESTIZIDE VERBINDUNG, DEREN VERWENDUNG UND VERFAHREN ZUM SCHUTZ VON PFLANZEN
COMPOSÉ PESTICIDE, UTILISATION DE CELUI-CI ET PROCÉDÉ DE PROTECTION DE PLANTES

(30) Priority: 01.06.2012 CZ 20120371
(43) Date of publication of application: 15.04.2015
(73) Proprietor: Agra Group, A.S., 387 15 Strelske Hostice (CZ)
(72) Inventor: CIGLER, Petr, 160 00 Praha 6 (CZ)
(74) Representative: Hartvichova, Katerina
(86) International application number: PCT/CZ2013/000070
(87) International publication number: WO 2013/178200

(56) References cited:
- DATABASE CAPLUS [Online] CHEMICAL ABSTRACTS SERVICE, COLUMBUS, OHIO, US; DESCHIENS, ROBERT ET AL: "Use of copper(I)oxide as selective molluscicide in the prophylaxis of bilharziasis", XP002716945, retrieved from STN Database accession no. 1965:5525 & DESCHIENS, ROBERT ET AL: "Use of copper(I)oxide as selective molluscicide in the prophylaxis of bilharziasis", COMPT. REND. , 252, 4221-2 FROM: CZ 1962(12), 4248-9., 1961,
- L.A.SILVA ET AL: "Synthesis, identification and thermal decomposition of double sulfites Cu2SO3.MSO3.2H2O (M=Cu,Fe,Mn or Cd)", THERMOCHIMICA ACTA, vol. 360, 2000, pages 17-27, XP002716933,

## Description

### Field of Art

The present invention relates to compound possessing pesticidal activities, to use thereof for prophylaxis and treatment of plant infections caused by fungal pathogens, to a method of protection of plants against fungal pathogens.

### Background Art

Fungal diseases belong among key pathogens in agricultural production. These pathogens must be controlled in order to prevent further infection of the plants. Apart from causing the decrease of yields, fungi represent a significant health risk for both humans and animals, because they contaminate crops with mycotoxins - products of their own metabolism. The control of fungal diseases therefore has a considerable economic impact.

Various fungicidal products containing organic or inorganic active substances are known in the art and commercially available. The organic substances usually show a high fungicidal activity, however, the application thereof often results in accumulation of toxic residues of xenobiotic organic substances in the environment and in agricultural products entering the food chain. Among the inorganic substances, the low-soluble Cu(II)-compounds are widely used, the fungicidal effect of which is known since 1882 (Bordeaux mixture comprising cupric hydroxide). In general, these compounds show a rather low activity and they must be applied in massive doses (e.g., the recommended dose of cupric oxychloride [CuCl₂.3Cu(OH)₂], commecrially available under the trade name Kuprikol 50, is 4 to 5 kg per hectar, which corresponds to 2.0 to 2.5 kg of copper per hectar). High doses of copper compounds burden the soil and result in an undesirable copper accumulation (Kaplan M., J. Plant Nutr. 1999, 22, 237-244).

EP 1471787 discloses a fungicidal preparation allowing to decrease the overall copper dose by using a mixture of cupric hydroxide and at least one other copper compound selected from CuCl₂.3Cu(OH)₂, basic cupric sulphate, Bordeaux mixture and cupric-calcium oxychloride. This mixture allows to increase the effectivity ca 1.4-times, compared to the individual compounds.

The US patent application 2009/136581 discloses fungicide and bactericide preparation comprising cupric hydroxide and water-soluble carboxylic acid derivative as a chelating agent. This mixture allowed to decrease the overall copper dose 1.5-times compared to cupric hydroxide itself or 6.3-times compared to CuCl₂.3Cu(OH)₂ while maintaining the same effect. The decrease of the copper dose according to EP 1471787 and US 2009/136581, however, is still not sufficient.

WO 2010/076038 discloses fungicide preparations based on ternary mixtures of cupric salicylate salt, cupric hydroxide and a component comprising copper and/or calcium hydroxide-chloride or hydroxide-sulphate. The document shows the synergism of these components using the example of *Plasmopara viticola* mould, but it does not deal with the optimization of the overall dose of copper per hectar. There still exists the need for novel pesticide preparations providing copper which would be active at very low application doses and without toxic effects on the plants.

### Disclosure of the Invention

The aim of the invention is achieved according to the present invention by the provision of novel fungicidal preparations comprising double salt Cu₂SO₃.CuSO₃.2H₂O (Chevreul's salt). The synthesis, structure and chemical properties of this compound are known (Silva L. A., Andrade J. B., J. Braz. Chem. Soc., 2004, 15(2), 170-177; Silva L.A. et al. Thermochimica Acta, 2000, 360, 17-27), and its molluscicidal activity was published (Deschiens, R. et al., Compt. Rend. 1961, 252, 4221-2) but its fungicidal effects were not yet disclosed.

This double salt contains copper in two oxidation states: Cu²⁺ and Cu⁺. Its low solubility is exploited in metallurgical industry for hydrometallurgical separation of copper from solutions containing Cu²⁺ ions (US 4070183). The compound can be prepared by several processes, typically by reduction of Cu²⁺ compounds in an aqueous solution using compounds of S⁴⁺ (SO₂, HSO₃⁻ etc.) at an elevated temperature (Calban T. et al., Chem. Eng. Comm. 2009, 196, 1018-1029).

The object of the invention is the use of the compound Cu₂SO₃.CuSO₃.2H₂O for the protection of plants against fungal diseases.

The object of the invention is also a method of protection of plants against fungal diseases, in which the compound Cu₂SO₃.CuSO₃.2H₂O is applied to seeds, plant, fruits or into soil.

The compound of the invention can be formulated into a fungicidal, preparation for protection of plants, comprising Cu₂SO₃.CuSO₃.2H₂O.

The preparation may further contain auxiliary substances such as fillers, surfactants, antioxidants, defoaming agents and other auxiliaries.

Fillers are natural or synthetic organic or inorganic substances which when mixed with the active substance facilitate its application. The filler must be inert and acceptable for use in agriculture. Examples are kaolin, montmorilonite, atapulgite, bentonite, calcite, dolomite, natural or synthetic silicates and aluminosilicates, fertilizers, water or mineral and plant oils and derivatives thereof. Mixtures of these fillers can be used as well. The content of the filler in the mixtures is preferably 1 to 90 % w/w, in wettable powders preferably 15 to 80 % w/w, in suspension concentrates preferably 5 to 35 % w/w.

Surfactants are ionic or non-ionic dispergation agents, soaking agents or emulgators. Examples are salts of naphthalenesulphonic, phenolsulphonic and ligninsulphonic acids, polycondensates of ethylene oxide with fatty acids or amines, substituted phenols (in particular alkylphenols and arylphenols), salts of sulphosuccinic acid esters, salts of alkylbenzenesulphonic acid, taurin derivatives (in particular alkyltaurates), esters of phosphoric acid with polyethoxylated alcohols or phenols, esters of fatty acids with polyols, and derivatives thereof containing sulphate, sulphonate or phosphate moiety. The contant of the surfactant in the mixtures is preferably 2 to 60 % w/w.

Antioxidants are any compounds acceptable for use in agriculture which are able to stabilize Cu₂SO₃.CuSO₃.2H₂O against oxidation. Preferably, compounds containing S⁴⁺ are used, e.g., NaHSO₃, Na₂SO₃, Na₂S₂O₅ or K₂S₂O₅. The content of the antioxidant in the preparation is preferably 0,01 to 10 % w/w.

Defoaming agents are any compounds decreasing the foam stability. Preferably, silicone-based compounds are used.

Further auxiliaries are colloid stabilizers, adhesives, binders and rheologic modifiers. Generally, Cu₂SO₃.CuSO₃.2H₂O can be combined with any liquid or solid additive commonly used for pesticide or fertilizer formulations.

The preparation of the present invention preferably contains 1 to 99 % w/w of Cu₂SO₃.CuSO₃.2H₂O. When formulated as a wettable powder, it preferably contains 10 to 90 % w/w, most preferably 40 to 80 % w/w of Cu₂SO₃.CuSO₃.2H₂O. When formulated as a suspension concentrate, it preferably contains 1 to 50 % w/w, most preferably 5 to 30 % w/w of the active compound.

The preparations of the invention can be provided as various formulations, suitable for application in agriculture as such or after dilution, such water-dispergable granules or microgranules, wettable powders, water-dispergable tablets, suspensions, suspension concentrates, water-dispergable pastes, emulgable powders, emulgable granules or microgranules, emulgable suspension concentrations, microemulsions, colloid solutions containing nano- or microparticles of Cu₂SO₃.CuSO₃.2H₂O. Wettable powders can be filled into soluble wrappers, the use of which prevents undesirable dusting or breathing-in the powder by the user.

For the above-listed applications, Cu₂SO₃.CuSO₃.2H₂O has preferably grain size smaller than 100 µm, more preferably smaller than 75 µm, even more preferably smaller than 50 µm.

The preparation of the invention can contain further substances, such as insecticides, fungicides, bactericides, attractants, acaricides, pheromones and further substances showing biological effects. The presence of these compounds broadens the spectrum of effects of the preparation. Particularly advantageous are combinations with other fungicides. The substances that can be used in such broad-spectrum preparations are, e.g.,
- substances capable of inhibiting nucleic acid synthesis, such as benalaxyl, benalaxyl-M, bupirimate, clozylacone, dimethirimol, ethirimol, furalaxyl, hymexazol, mefenoxam, metalaxyl, metalaxyl-M, ofurace, oxadixyl, oxolinic acid;
- substances capable of inhibiting mitose and cell division, such as benomyl, carbendazim, diethofencarb, ethaboxam, fuberidazole, pencycuron, thiabendazol, thiophanate-methyl, zoxamid;
- substances capable of inhibiting breathing, such as diflumetorim, boscalid, carboxin, fenfuram, flutolanil, furametpyr, furmecyclox, mepronil, oxycarboxin, penthiopyrad, thifluzamid, amisulbrom, azoxystrobin, cyazofamid, dimoxystrobin, enestrobin, famoxadone, fenamidone, fluoxastrobin, kresoxim-methyl, metominostrobin, orysastrobin, picoxystrobin, pyraclostrobin, trifloxystrobin
- substances capable of inhibiting oxidative phosphorylation, such as dinocap, fluazinam, meptyldinocap;
- substances capable of ATP synthesis inhibition, such as fentin acetate, fentin chlorid, fentin hydroxide, silthiofam;
- substances capable of inhibiting aminoacid and protein biosynthesis, such as andoprim, blasticidin-S, cyprodinil, kasugamycin, kasugamycin hydrochlorid hydrate, mepanipyrim, pyrimethanil;
- substances capable of inhibiting signal transmission, such as fenpiclonil, fludioxonil, chinoxyfen;
   substances capable of inhibiting lipid and membrane component synthesis, such as bifenyl, chlozolinate, edifenphos, etridiazol, iodocarb, iprobenfos, iprodione, isoprothiolan, procymidon, propamocarb, propamocarb hydrochlorid, pyrazophos, tolclofos-methyl, vinclozolin;
- substances capable of inhibiting ergosterol biosynthesis, such as aldimorph, azaconazol, bitertanol, bromuconazol, cyproconazol, diclobutrazol, difenoconazol, diniconazol, diniconazol-M, dodemorph, dodemorph acetate, epoxiconazol, etaconazol, fenarimol, fenbuconazol, fenhexamid, fenpropidin, fenpropimorph, fluquinconazol, flurprimidol, flusilazol, flutriafol, furconazol, furconazol-cis, hexaconazol, imazalil, imazalil, sulfate, imibenconazol, ipconazol, metconazol, myclobutanil, naftifin, nuarimol, oxpoconazol, paclobutrazol, pefurazoate, penconazol, prochloraz, propiconazol, prothioconazol, pyributicarb, pyrifenox, simeconazol, spiroxamin, tebuconazol, terbinafin, tetraconazol, triadimefon, triadimenol, tridemorph, triflumizole, triforin, triticonazol, uniconazol, viniconazol, voriconazol;
- substances capable of inhibiting cell wall synthesis, such as benthiavalicarb, dimethomorph, flumorph, iprovalicarb, mandipropamid, polyoxins, polyoxorim, validamycin A;
- substances capable of inhibiting melamine biosynthesis, such as carpropamid, diclocymet, fenoxanil, ftalid, pyroquilon, tricyklazol;
- substances capable of inducing resistance towards pathogens and insect pests, such as acibenzolar-S-methyl, probenazol, tiadinil;
- substances with a wide range of therapeutic effects, such as Bordeaux misture, captafol, captan, chlorothalonil, copper naphtenane, copper(II) oxide, copper(II) oxychloride, copper-calcium oxychloride, copper(II) hydroxide, copper(II) sulphate, basic copper(II) sulphate, dichlofluanid, dithianon, dodine, dodine free base, ferbam, fluorofolpet, folpet, guazatine, guazatine acetate, iminoktadin, iminoktadin albesilate, iminoktadin triacetate, mancopper, mancozeb, maneb, metiram, zinc metiram, copper(II) bis(8-hydroxyquinolinate), propineb, sulphur and sulphur-containing preparations, such as calcium polysulphide, tolylfluanid, zineb, ziram;
- compounds selected from the following list: (2E)-2-(2-{[6-(3-chloro-2-methylphenoxy)-5-fluorpyrimidin-4-yl]oxy}phenyl)-2-(methoxyimino)-N-methylacetamide, (2E)-2-{2-[({[(1E)-1-(3-{[(E)-1-fluoro-2-phenylvinyl]oxy}phenyl)ethylidene]amino}oxy)methyl]phenyl}-2-(methoxyimino)-N-methylacetamide, 1-(4-chlorophenyl)-2-(1H-1,2,4-triazol-1-yl)cycloheptanol, 1-[(4-methoxyphenoxy)methyl]-2,2-dimethylpropyl-1H-imidazole-1-carboxylate, 1-methyl-N-[2-(1,1,2,2-tetrafluoroethoxy)phenyl]-3-(trifluoromethyl)-1H-pyrazole-4-carboxamide, 2,3,5,6-tetrachloro-4-(methylsulphonyl)pyridine, 2-butoxy-6-iodo-3-propyl-4H-chromen-4-one, 2-chloro-N-(1,1,3-trimethyl-2,3-dihydro-1H-inden-4-yl)nicotinamide, 2-phenylphenol and salts thereof, 3-(difluoromethyl)-1-methyl-N-[2-(1,1,2,2-tetrafluoroethoxy)phenyl]-1H-pyrazole-4-carboxamide, 3-(difluoromethyl)-N-[(9R)-9-isopropyl-1,2,3,4-tetrahydro-1,4-methanonaphthalen-5-yl]-1-methyl-1H-pyrazole-4-carboxamide, 3-(difluoromethyl)-N-[(9S)-9-isopropyl-1,2,3,4-tetrahydro-1,4-methanonaphthalen-5-yl]-1-methyl-1H-pyrazole-4-carboxamide, 3-(difluoromethyl)-N-[4'-(3,3-dimethylbut-1-yn-1-yl)biphenyl-2-yl]-1-methyl-1H-pyrazole-4-carboxamide, 3,4,5-trichloropyridine-2,6-dicarbonitrile, 3-[5-(4-chlorophenyl)-2,3-dimethylisoxazolidin-3-yl]pyridine, 3-chloro-5-(4-chlorophenyl)-4-(2,6-difluorophenyl)-6-methylpyridazine, 4-(4-chlorophenyl)-5-(2,6-difluorophenyl)-3,6-dimethylpyridazine, 5-chloro-7-(4-methylpiperidin-1-yl)-6-(2,4,6-trifluorophenyl)[1,2,4]triazolo[1,5-a]pyrimidine, 8-hydroxyquinoline sulphate, benthiazol, bethoxazin, capsimycin, carvone, chinomethionat, cufraneb, cyflufenamid, cymoxanil, dazomet, debacarb, dichlorofen, diclomezine, dicloran, difenzoquat, difenzoquat methylsulfate, diphenylamin, ecomate, ferimzone, flumetover, fluopicolid, fluoroimid, flusulfamid, fosetyl-aluminium, fosetyl-calcium, fosetyl-sodium, hexachlorbenzen, irumamycin, isotianil, methasulfocarb, methyl (2E)-2-{2-[{cyclopropyl[(4-methoxyphenyl)imino]methyl}thio)methyl]phenyl}-3-methoxyacrylate, methyl 1-(2,2-dimethyl-2,3-dihydro-1H-inden-1-yl)-1H-imidazole-5-carboxylate, methyl isothiocyanate, metrafenon, mildiomycin, N-(3',4'-dichloro-5-fluorobiphenyl-2-yl)-3-(difluoromethyl)-1-methyl-1H-pyrazole-4-carboxamide, N-(3-ethyl-3,5,5-trimethylcyclohexyl)-3-(formylamino)-2-hydroxybenzamide, N-(4-chloro-2-nitrophenyl)-N-ethyl-4-methylbenzenesulphonamide, N-(4-chlorobenzyl)-3-[3-methoxy-4-(prop-2-yn-1-yloxy)phenyl]propanamide, N-[(4-chlorophenyl)(cyano)methyl]-3-[3-methoxy-4-(prop-2-yn-1-yloxy)phenyl]propanamide, N-[(5-bromo-3-chloropyridin-2-yl)methyl]-2,4-dichloronicotinamide, N-[1-(5-bromo-3-chloropyridin-2-yl)ethyl]-2,4-dichloronicotinamide, N-[1-(5-bromo--chloropyridin-2-yl)ethyl]-2-fluoro-4-iodonicotinamide, N-[2-(1,3-dimethylbutyl)phenyl]-5-fluoro-1,3-dimethyl-1H-pyrazol-4-carboxamide, N-{(Z)-[(cyclopropylmethoxy)imino][6-(difluoromethoxy)-2,3-difluorophenyl]methyl}-2-phenylacetamide, N-{2-[1,1'-bi(cyclopropyl)-2-yl]phenyl}-3-(difluoromethyl)-1-methyl-1H-pyrazole-4-carboxamide, N-{2-[3-chloro-5-(trifluoromethyl)pyridin-2-yl]ethyl}-2-(trifluoromethyl)benzamide, natamycine, N-ethyl-N-methyl-N'-{2-methyl-5-(trifluoromethyl)-4-[3-(trimethylsilyl)propoxy]phenyl}imidoformamide, N-ethyl-N-methyl-N'-{2-methyl-5-(difluoromethyl)-4-[3-(trimethylsilyl)propoxy]phenyl}imidoformamide, nickel(II) dimethyldithiocarbamate, nitrothal-isopropyl, O-{1-[(4-methoxyphenoxy)methyl]-2,2-dimethylpropyl}1H-imidazole-1-carbothioate, octhilinon, oxamocarb, oxyfenthiin, pentachlorofenol and salts thereof, phosphonic acid and salts thereof, piperalin, propamocarb fosetylate, propanosin-sodium, proquinazid, pyribencarb, pyrrolnitrine, quintozene, S-allyl-5-amino-2-isopropyl-4-(2-methylphenyl)-3-oxo-2,3-dihydro-1H-pyrazole-1-carbothioate, tecloftalam, tecnazene, triazoxid, trichlamid, valiphenal, zarilamid;
- compounds with bactericidal effects, such as bronopol, dichlorofen, nitrapyrin, nickel(II) dimethyldithiocarbamate, kasugamycin, octhilinon, furancarboxylic acid, oxytetracyclin, probenazol, streptomycin, tecloftalam, copper(II) sulphate and further compounds and preparations containing copper.

The preparation of the invention can be used for both curative and prophylactic protection of plants against fungal pathogens in such a way that it is applied to the plants, seeds, fruits or into the soil in which the plants are grown. The crops that can be protected by this method include, e.g., cotton plant, flax, grapevine, crops of the family Rosaceae (e.g., apple tree, pear tree, apricot tree, almond tree, peach tree, strawberry plant), Ribesioidae, Juglandaceae, Betulaceae, Anacardiaceae, Fagaceae, Moraceae, Oleaceae, Actinidaceae, Lauraceae, Musaceae, Rubiaceae, Theaceae, Sterculiceae, Rutaceae (e.g., lemon tree, orange tree, grapefruit), Solanaceae (e.g., tomato), Liliaceae, Asteraceae (e.g. lettuce), Umbelliferae, Cruciferae, Chenopodiaceae, Cucurbitaceae, Papilionaceae (e.g., peas), Graminae (e.g., corn, grass or cereals such as wheat, barley, oat, rye or triticale), Asteraceae (e.g., sunflowers), Poaceae (e.g., rice, sorghum), Cucurbitaceae (e.g., cucumber, pumpkin, melon, marrow), Brassicaceae (e.g., cabbage), Cruciferae (e.g., rape plant), Apiaceae (e.g., carrots, parsley, celery), Alliaceae (e.g., onion), Fabacae (e.g., peanut), Papilionaceae (e.g., soybean, lens, peas, beans), Solanaceae (e.g., potatoes, pepper), Chenopodiaceae (e.g., sugar beet, spinach); in general, agricultural, technical and horticultural crops and their genetically modified homologues.

The preparation of the invention can preferably be used for the protection of the cereals of the family Graminae, e.g., wheat, barley, oat, rye or triticale.

The preparation of the invention can be used for prophylaxis or treatment of, e.g., the following diseases caused by the pathogens of the genera:
Alternaria, caused by, e.g., Alternaria solani;
Aspergillus, caused by, e.g., Aspergillus flavus;
Blumeria, caused by, e.g., Blumeria graminis;
Botrytis, caused by, e.g., Botrytis cinerea;
Bremia, caused by, e.g., Bremia lactucae;
Cercospora, caused by, e.g., Cercospora beticola;
Cladosporum, caused by, e.g., Cladosporium cucumerinum;
Claviceps, caused by, e.g., Claviceps purpurea;
Cochliobolus caused by, e.g., Cochliobolus sativus;
Colletotrichum, caused by, e.g., Colletotrichum lindemuthanium;
Corticium, caused by, e.g., Corticium graminearum;
Cycloconium, caused by, e.g., Cycloconium oleaginum;
Diaporthe, caused by, e.g., Diaporthe citri;
Diplodia, caused by, e.g., Diplodia maydis
Elsinoe, caused by, e.g., Elsinoe fawcettii;
Esca, caused by, e.g., Phaemoniella clamydospora;
Eutypa, caused by, e.g., Eutypa lata;
Fusarium, caused by, e.g., Fusarium oxysporum, Fusarium culmorum, Fusarium solani, Fusarium graminearum, Fusarium verticillioides or Fusarium moniliforme;
Gaeumannomyces, caused by, e.g., Gaeumannomyces graminis;
Gibberella, caused by, e.g., Gibberella zeae nebo Gibberella fujikuroi;
Gloeosporium, caused by, e.g., Gloeosporium laeticolor;
Glomerella, caused by, e.g., Glomerella cingulata;
Guignardia, caused by, e.g., Guignardia bidwelli;
Gymnosporangium, caused by, e.g., Gymnosporangium sabinae;
Helminthosporium, caused by, e.g., Helminthosporium solani;
Hemileia, caused by, e.g., Hemileia vastatrix;
Leptosphaeria, caused by, e.g., Leptosphaeria maculans nebo Leptosphaeria nodorum;
Magnaporthe, caused by, e.g., Magnaporthe grisea;
Microdochium, caused by, e.g., Microdochium nivale;
Monilinia, caused by, e.g., Monilinia laxa;
Monographella, caused by, e.g., Monographella nivalis;
Mycosphaerella, caused by, e.g., Mycosphaerella graminicola, Mycosphaerella arachidicola or Mycosphaerella fijiensis;
Nectria, caused by, e.g., Nectria galligena;
Ophiostoma, caused by, e.g., Ophiostoma ulmi (Brisman) Nannf.;
Penicillium, caused by, e.g., Penicillium expansum nebo Penicillium brevicompactum; Peronospora, caused by, e.g., Peronospora pisi nebo P. brassicae;
Phaeosphaeria, caused by, e.g., Phaeosphaeria nodorum;
Phakopsora, caused by, e.g., Phakopsora pachyrhizi nebo Phakopsora meibomiae;
Phoma, caused by, e.g., Phoma beta, Phoma batata nebo Phoma solani;
Phomopsis, caused by, e.g., Phomopsis viticola
Phytophthora, caused by, e.g., Phytophthora infestans nebo Phytophthora cactorum; Plasmopara, caused by, e.g., Plasmopara viticola;
Podosphaera, caused by, e.g., Podosphaera leucotricha;
Pseudoperonospora, caused by, e.g., Pseudoperonospora humuli nebo Pseudoperonospora cubensis;
Puccinia, caused by, e.g., Puccinia recondita;
Pyrenophora, caused by, e.g., Pyrenophora teres;
Pythium, caused by, e.g., Pythium ultimum;
Ramularia, caused by, e.g., Ramularia collo-cygni;
Rhizoctonia, caused by, e.g., Rhizoctonia solani;
Rhizopus, caused by, e.g., Rhizopus arrhizus nebo Rhizopus stolonifer;
Rhynchosporium, caused by, e.g., Rhynchosporium secalis;
Sclerotinia, caused by, e.g., Sclerotinia sclerotiorum;
Sclerotium, caused by, e.g., Sclerotium rolfsii;
Septoria, caused by, e.g., Septoria apii nebo Septoria lycopercisi;
Sphacelotheca, caused by, e.g., Sphacelotheca reiliana;
Sphaerotheca, caused by, e.g., Sphaerotheca fuliginea;
Tapesia, caused by, e.g., Tapesia acuformis;
Taphrina, caused by, e.g., Taphrina deformans;
Thielaviopsis, caused by, e.g., Thielaviopsis basicola;
Tilletia, caused by, e.g., Tilletia caries;
Typhula, caused by, e.g., Typhula incarnata;
Uncinula, caused by, e.g., Uncinula necator;
Urocystis, caused by, e.g., Urocystis occulta;
Uromyces, caused by, e.g., Uromyces appendiculatus;
Ustilago, caused by, e.g., Ustilago nuda;
Venturia, caused by, e.g., Venturia inaequalis;
Verticilium, caused by, e.g., Verticilium alboatrum.

The preparation can preferably be used for protection against diseases caused by the pathogens of the genus *Fusarium.*

In a particularly preferred embodiment, the preparation is in the form of suspension concentrate and contains 5 to 30 wt. % of Cu₂SO₃.CuSO₃.2H₂O, 5 to 45 wt. % of filler, 2 to 60 wt. % of surfactant, solvent and optionally further auxiliary substances. The solvent is preferably water.

The dose of Cu₂SO₃.CuSO₃.2H₂O at foliar application can be in the range of 10 to 1500 g/ha, preferably 25 to 500 g/ha, more preferably 50 to 250 g/ha.

### Examples of carrying out the Invention

### Example 1

### Preparation of wettable powders

Wettable powder A was prepared from the following raw materials by thorough mixing, grinding and meshing through a 44 µm mesh.

| **Raw material** | **Formulation A [wt. %]** |
|---|---|
| Cu₂SO₃.CuSO₃.2H₂O | 70 |
| Sodium polynaphthalenesuphfonate | 4 |
| Kaolin (particle size 1.4 µm) | 26 |

### Example 2

### Preparation of suspension concentrates

Suspension concentrate **F** was prepared according to the following procedure: kaolin was suspended and hydrated in water. Sodium polynaphthalenesulphonate and Cu₂SO₃.CuSO₃.2H₂O were added. The mixture was homogenized.

Stabilized suspension concentrate **K** was prepared according to the following procedure: kaolin was suspended and hydrated in water. Sodium polynaphthalenesulphonate, Cu₂SO₃.CuSO₃.2H₂O and sodium hydrogensulphite solution were added. The mixture was homogenized.

| **Raw material** | **Formulation [wt. %]** | |
|---|---|---|
| | **F** | **K** |
| Cu₂SO₃.CuSO₃.2H₂O | 15 | 15 |
| Sodium polynaphthalenesulphonate | 3 | 3 |
| Kaolin (particle size 1.4 µm) | 35 | 35 |
| Sodium hydrogensulphite, 35% solution | | 1 |
| Water | 47 | 46 |

### Example 3

### Fungal mycelium growth inhibition assay

The assay for inhibitory activity of Cu₂SO₃.CuSO₃.2H₂O to radial growth of mycelia was carried out in agar by a multiple dilution method. The compound was diluted to concentrations shown in the Table in potato dextrose agar prepared in accordance with manufacturer's instructions. Petri dishes were filled with the thus prepared agar and aseptically inoculated with a disc of the diameter of 0.4 cm cut from a 7-day agar culture of the respective fungus. Controls were prepared in an analogous manner, using sterile distilled water instead of Cu₂SO₃.CuSO₃.2H₂O. The Petri dishes were incubated for 7 days at 21 °C and then the diameter of the colonies was measured. The percentage of inhibition of radial growth of the respective fungus was calculated according to the following equation: inhibition [%] = (DC-DT)/DC×100, wherein DC is the diameter of control colony and DT is the diameter of the colony grown on the agar containing the respective amount of Cu₂SO₃.CuSO₃.2H₂O. Standard deviation corresponds to averages from 3 replications.

The results are shown in Table 1. The compound Cu₂SO₃.CuSO₃.2H₂O inhibited the growth of all tested mycelia (Table 1). Individual mycelia have shown a variation in the sensitivity to the compound and concentration dependency on the fungicide dose was observed.

**Table 1: Percentage of radial growth inhibition**

| Mycelium | Cu₂SO₃.CuSO₃.2H₂O [mg/mL agar] | | |
|---|---|---|---|
| | 0.3 | 0.4 | 0.5 |
| Fusarium oxysporum | 6.72 ± 0.05 % ¹⁾ | 59.70 ± 0.16 % ¹⁾ | 97.76 ± 0.00 % |
| Fusarium verticillioides | -2.81 ± 0.00 % ²⁾ | 19.10 ± 0.16 % ²⁾ | 30.90 ± 0.00 % ²⁾ |
| Penicillium brevicompactum | 77.78 ± 0.09 % | 95.24 ± 0.00 % | 100.00 ± 0.00 % |
| Penicillium expansum | 98.37 ± 0.05 % | 96.75 ± 0.05 % | 100.00 ± 0.00 % |
| Aspergillus flavus | 97.67 ± 0.05 % | 98.84 ± 0.05 % | 100.00 ± 0.00 % |
| Aspergillus fumigatus | 100.00 ± 0.00 % | 100.00 ± 0.00 % | 100.00 ± 0.00 % |

| | | | |
|---|---|---|---|
| ¹⁾ sparse mycelium ²⁾ sparse yeast-like growth of the mycelium | | | |

### Example 4

### Field trial with crops

In 2010 and 2011, field trials using *Triticum aestivum* L. and *Hordeum vulgare* L. were performed. The experimental field was chosen in a warm region suitable for beet cultivation, with sufficient precipitation, soil type was brown earth. The plants were treated using a common agrotechnology, with the exception of the application of fungicidal protection. Instead, the compound Cu₂SO₃.CuSO₃.2H₂O was applied in the form of foliar spraying of wettable powder A prepared according to Example 1, in the dose according to Table 3, in the growth phase BBCH 62 (flowering), when the cereals are typically treated against the *Fusarium* mould infection of the ear. The broadscale commercial fungicidal preparation Horizon 250 EW (Bayer) containing tebuconazol as the active substance was used as a control, in the dose recommended by the manufacturer (Table 2). Water was used as the negative control.

At the end of the vegetative season, the crops were harvested and the yield was determined. For both crops, positive effect on the yield was observed, the yield increased by 3.2 to 10.1 % (see Table 2). No phytotoxic effects were observed, neither occurence of fusarioses or other fungal diseases. In comparison with the recommended dose of the commercial fungicide Horizon 250 EW, the yield was similar or higher. The total dose of copper per hectar corresponding to the lower application dose of Cu₂SO₃.CuSO₃.2H₂O (125 g/ha), which was fully sufficient to ensure the protective fungicidal effect, is 61 g/ha, that is 30 to 40 times less than for the usual dose of preparations containing CuCl₂.3Cu(OH)₂.

In 2011, a high concentration of Cu₂SO₃.CuSO₃.2H₂O (625 g/ha) was tested for both crops. No phytotoxic effects were observed even at this dose.

**Table 2**

| Crop | Year | Dose of Cu₂SO₃.CuSO₃.2H₂O [g/ha] | Horizon 250 EW [ml/ha] | Yield [t/ha] | % of the control |
|---|---|---|---|---|---|
| *Triticum aestivum* | 2010 | 125 | - | 7.34 | 104.7 |
| | | - | 1000 | 7.00 | 100.0 |
| | | - | - | 7.01 | 100.0 |
| | 2011 | 125 | - | 8.45 | 108.1 |
| | | 625 | - | 8.60 | 110.1 |
| | | - | 1000 | 8.08 | 103.4 |
| | | - | - | 7.81 | 100.0 |
| *Hordeum vulgare* | 2011 | 125 | - | 8.65 | 103.2 |
| | | 625 | - | 8.73 | 104.2 |
| | | - | 1000 | 8.73 | 104.2 |
| | | - | - | 8.38 | 100.0 |

**Table 3**

| Crop | Year | Dose of Cu₂SO₃.CuSO₃.2H₂O [g/ha] | Horizon 250 EW [ml/ha] | Yield [t/ha] | % of the control |
|---|---|---|---|---|---|
| *Triticum aestivum* | 2010 | 125 | - | 7.34 | 104.7 |
| | | - | 1000 | 7.00 | 100.0 |
| | | - | - | 7.01 | 100.0 |
| | 2011 | 125 | - | 8.45 | 108.1 |
| | | 625 | - | 8.60 | 110.1 |
| | | - | 1000 | 8.08 | 103.4 |
| | | - | - | 7.81 | 100.0 |
| *Hordeum vulgare* | 2011 | 125 | - | 8.65 | 103.2 |
| | | 625 | - | 8.73 | 104.2 |
| | | - | 1000 | 8.73 | 104.2 |
| | | - | - | 8.38 | 100.0 |

## Claims

1. Use of compound Cu₂SO₃.CuSO₃.2H₂O for protection of plants against fungal diseases.

2. A method of protecting plants against fungal diseases, **characterized in that** the compound Cu₂SO₃.CuSO₃.2H₂O is applied to seeds, plant, fruits or into soil.

3. The method according to claim 2, wherein the compound Cu₂SO₃.CuSO₃.2H₂O is applied using foliar application in the amount in the range of 10 to 1500 g/ha, preferably 25 to 500 g/ha, more preferably 50 to 250 g/ha.

## Patentansprüche

1. Verwendung der Verbindung Cu₂SO₃.CuSO₃.2H₂O zum Schutz von Pflanzen gegen Pilzerkrankungen.

2. Verfahren zum Schutz von Pflanzen gegen Pilzerkrankungen, **dadurch gekennzeichnet, dass** die Verbindung Cu₂SO₃.CuSO₃.2H₂O auf Samen, Pflanzen, Früchte oder in Erde aufgetragen wird.

3. Verfahren nach Anspruch 2, **dadurch gekennzeichnet, dass** die Verbindung Cu₂SO₃.CuSO₃.2H₂O in einer Menge im Bereich von 10 bis 1500 g/ha, bevorzugt 25 bis 500 g/ha, besonders bevorzugt 50 bis 250 g/ha, auf Pflanzenblättern angewendet wird.

## Revendications

1. Utilisation du composé Cu₂SO₃.CuSO₃.2H₂O pour la protection des plantes contre les maladies fongiques.

2. Procédé de protection des plantes contre les maladies fongiques, **caractérisé en ce que** le composé Cu₂SO₃.CuSO₃.2H₂O est appliqué sur des graines, des plantes, des fruits ou dans le sol.

3. Procédé selon la revendication 3, **caractérisé en ce que** l'on applique le composé Cu₂SO₃.CuSO₃.2H₂O à l'aide d'une application foliaire à raison de 10 à 1500 g/ha, de préférence de 25 à 500 g/ha, de préférence de 50 à 250 g/ha.
